# EUROPEAN PATENT APPLICATION

(11) **EP 4 741 306 A1**
(43) Date of publication of application: **13.05.2026**
(21) Application number: 25212920.0
(22) Date of filing: 03.11.2025
(51) Int. Cl.: B65D 5/50

(54) **PACKAGING MATERIAL**

(30) Priority: 07.11.2024 JP 2024194822
(71) Applicant: Kyocera Document Solutions Inc., Osaka-shi, Osaka 540-8585 (JP)
(72) Inventor: FUNAKI, Keiichi, Osaka-shi, 540-8585 (JP)
(74) Representative: Kurig, Thomas

(57) **Abstract**

A packaging material (1) packages an object having a main body and a cord integrally connected to one side surface of the main body. The packaging material (1) includes a box body (11) and a cushioning material (13). The box body (11) has a cylindrical side plate (23, 25) and a bottom plate (21). The cushioning material (13) is arranged in the box body (11), and the main body is placed on the cushioning material (13). The cushioning (13) material has a housing space (35) in which the cord is housed.

## Description

### BACKGROUND

The present disclosure relates to a packaging material for an object to be packaged having a main body and a cord integrally connected to one side surface of the main body.

An electric device such as a fixing unit used for a printer or the like has a main body and a power cord integrally connected to one side surface of the main body. When such an electric device is packaged in a packaging material, it is necessary to protect it from impact and to house the power cord compactly.

For example, JP2012-80968 discloses a packaging structure including a box body and cushioning materials disposed at four corners of the box body. The main body of the electric device is protected by the cushioning materials. The power cord removed from the main body is housed between the adjacent cushioning materials, and protected by a pad.

### SUMMARY

A packaging material according to the present disclosure packages an object having a main body and a cord integrally connected to one side surface of the main body. The packaging material includes a box body and a cushioning material. The box body has a cylindrical side plate and a bottom plate. The cushioning material is arranged in the box body, and the main body is placed on the cushioning material. The cushioning material has a housing space in which the cord is housed.

### BRIEF DESCRIPTION OF THE DRAWINGS

FIG. 1 is a cross-sectional perspective view of a packaging material according to one embodiment of the present disclosure.
FIG. 2 is a cross-sectional side view showing a packaging material (a state in which an object is packaged) according to the embodiment of the present disclosure.
FIG. 3 is a perspective view showing a cushioning material of the packaging material according to the embodiment of the present disclosure.
FIG. 4 is a perspective view showing a spacer of the packaging material according to the embodiment of the present disclosure.
FIG. 5 is a developed view showing the cushioning material (blank sheet) of the packaging material according to the embodiment of the present disclosure.
FIG. 6 is a developed view showing the spacer (blank sheet) of the packaging material according to the embodiment of the present disclosure.

### DETAILED DESCRIPTION

Hereinafter, with reference to the drawings, a packaging material according to one embodiment of the present disclosure will be described.

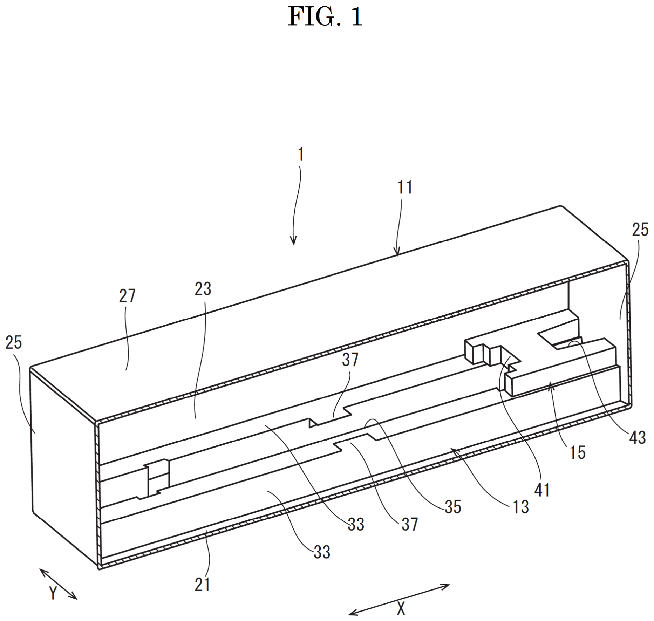

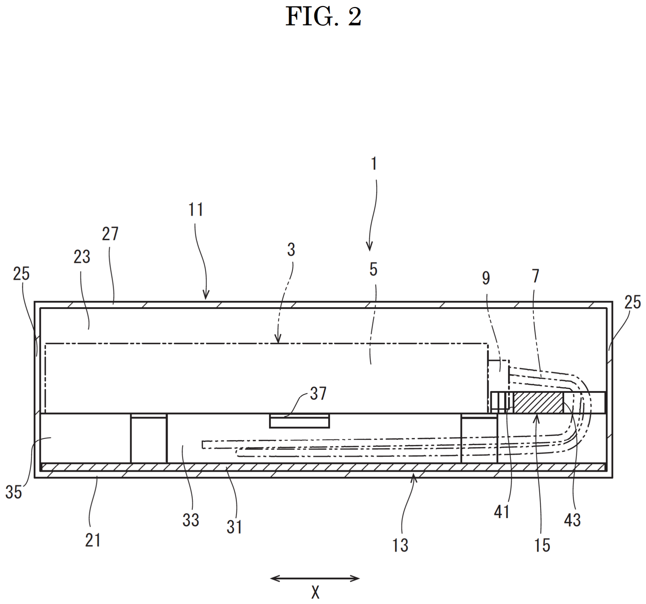

With reference to FIG. 1 and FIG. 2, the packaging material 1 will be described. FIG. 1 is a sectional perspective view showing the packaging material 1, and FIG. 2 is a sectional side view showing the packaging material 1 (a state in which an object 10 is packaged). In this embodiment, the packaging material 1 for packaging a fixing unit 3 used for a printer or the like as an object to be packaged will be described. The fixing unit 3 has a main body 5 for heating a toner image by IH and a plurality of power cords 7. The main body 5 has a rectangular parallelepiped shape. The power cords 7 are integrally connected to one short side surface of the main body 5 via a mounting portion 9.

The packaging material 1 includes a box body 11, a cushioning material 13 arranged inside the box body 11, and a spacer 15.

First, the box body 11 will be described. The box body 11 has a rectangular bottom plate 21, a pair of long side plates 23 and a pair of short side plates 25 rising from the four sides of the bottom plate 21, and a lid body 27. A length of the bottom plate 21 in the longitudinal direction X is longer than the longitudinal length of the main body 5 of the fixing unit 3, and a length of the bottom plate 21 in the transverse direction Y is equal to the transverse length of the main body 5. A height of the both side plates 23 and 25 is slightly higher than the total height of the main body 5 and the bundle of the power cords 7. The box body 11 is made of, for example, corrugated cardboard.

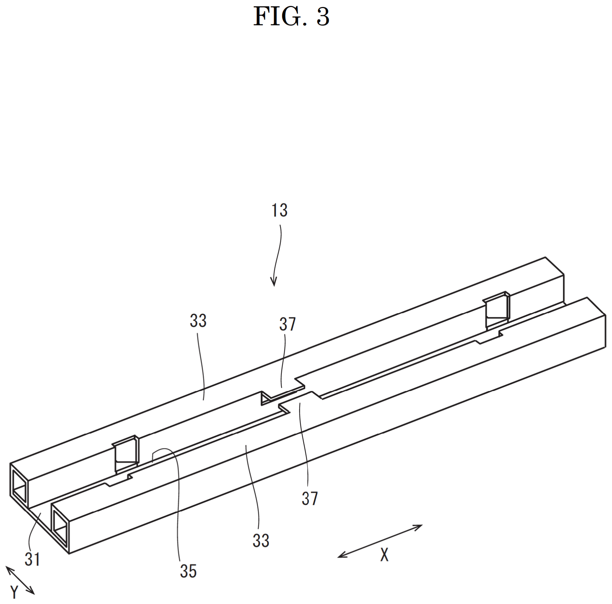

Next, the cushioning material 13 will be described with reference to FIG. 3. FIG. 3 is a perspective view showing the cushioning material 13. The cushioning material 13 is formed by assembling a blank sheet made of corrugated board as described later. The cushioning material 13 has a rectangular bottom plate 31 having the same planar shape as the bottom plate 21 of the box body 11, and a pair of square cylindrical side walls 33 stood along both long sides of the bottom plate 31. A rectangular parallelepiped housing space 35 having an open upper surface is formed between the side walls 33. A height of the side walls 33 (a height of the housing space 35) is substantially equal to the height of the bundle of the power cords 7.

Both side walls 33 have pressing pieces 37 projecting into the housing space 35 at substantially the center in the longitudinal direction X.

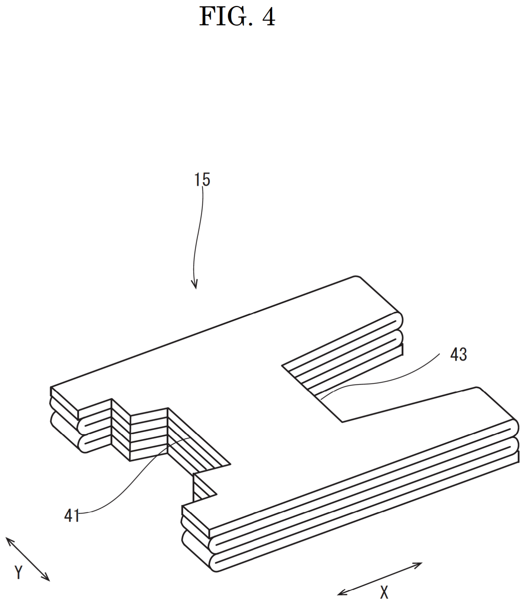

Next, the spacer 15 will be described with reference to FIG. 4. FIG. 4 is a perspective view showing the spacer 15. The spacer 15 is also formed by assembling a blank sheet made of corrugated board as described later. The spacer 15 has a substantially H-shaped planar shape and a predetermined height. Specifically, the spacer 15 has a flat rectangular parallelepiped shape, and a substantially rectangular first notch 41 and a second notch 43 are formed on one side surface and the other side surface.

Next, the procedure for packaging the fixing unit 3 in the packaging material 1 described above will be described again with reference to FIG. 1 and FIG. 2. First, the cushioning material 13 is placed on the bottom plate 21 of the box body 11 of the packaging material 1. The power cords 7 of the fixing unit 3 are bent downward relative to the main body 5, the power cords 7 is housed in the housing space 35 of the cushioning material 13, and the main body 5 is placed on the upper surfaces of both side walls 33 of the cushioning material 13. When the power cords 7 is housed in the housing space 35 of the cushioning material 13, the power cords 7 are pressed from above by the two pressing pieces 37.

In such a state that the power cords 7 are housed in the housing space 35 and the main body 5 is placed on the upper surfaces of both side walls 33, a gap is formed between one short side surface of the main body 5 and the inner surface of the short side plate 25 of the box body 11 facing the short side surface of the main body 5. Therefore, the spacer 15 is arranged in the gap. The first notch 41 of the spacer 15 houses the mounting portion 9 of the main body 5, and the second notch 43 houses the bent portions of the power cords 7. In practice, after the power cords 7 of the fixing unit 3 are bent downward relative to the main body 5, the mounting portion 9 is housed in the first notch 41 of the spacer 15, and the bent portions of the power cords 7 are housed in the second notch 43. Then, the power cords 7 is housed in the housing space 35, and the main body 5 is placed on the upper surfaces of both side walls 33.

Thereafter, a cushioning material (not shown) is disposed above the main body 5 as necessary, and the lid body 27 is closed.

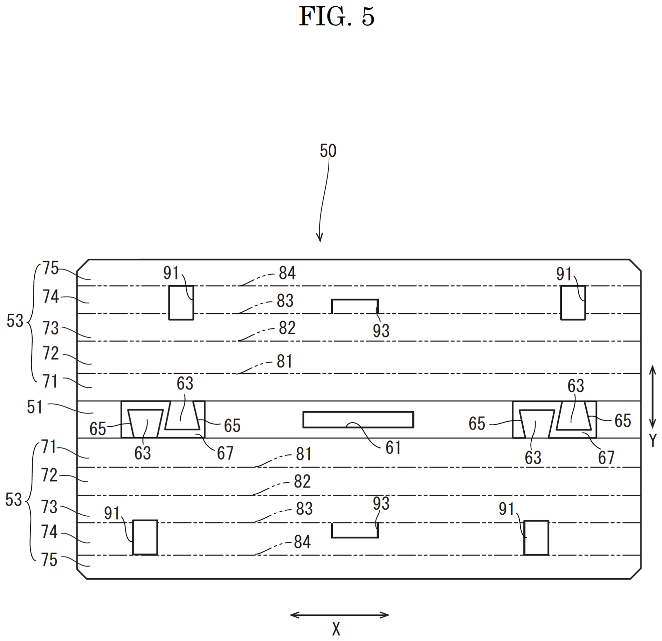

Next, the blank sheet 50 of the cushioning material 13 will be described with reference to FIG. 5. FIG. 5 is a developed view showing the cushioning material 13. The cushioning material 13 is formed by bending the blank sheet 50. FIG. 5 shows the inner surface of the blank sheet 50 as the inner surface of the cushioning material 13. The blank sheet 50 is made of, for example, corrugated cardboard.

The blank sheet 50 has a rectangular planar shape, and has a bottom plate section 51 for forming the bottom plate 21 of the cushioning material 13, and side wall sections 53 connected to both long sides of the bottom plate section 51 and forming the side walls 33 of the cushioning material 13.

First, the bottom plate section 51 will be described. A rectangular central opening 61 along the longitudinal direction X is formed in the central portion of the bottom plate section 51 in the longitudinal direction X. Two pairs of insertion pieces 63 are formed on both sides of the central opening 61 in the longitudinal direction X. The two insertion pieces 63 are arranged at an interval in the longitudinal direction X. One insertion piece 63 is formed by forming a cut line 65 from one long side of the bottom plate section 51 along an inverted trapezoidal shape, and the other insertion piece 63 is formed by forming a cut line 65 from the other long side of the bottom plate section 51 along an inverted trapezoidal shape. The inverted trapezoid is a trapezoid in which the lower side (the side on the long side of the bottom plate section 51) is shorter than the upper side. In this example, the two cut lines 65 are connected to form a rectangular window 67 around the two insertion pieces 63.

Next, each side wall section 53 will be described. Each side wall section 53 includes first to fifth side surface sections 71, 72, 73, 74, and 75 in order from the side of the bottom plate section 51. The first to fifth side surface sections 71, 72, 73, 74 and 75 have the same longitudinal lengths as the longitudinal length of the bottom plate section 51, and have the same transverse lengths. The first side surface section 71 and the second side surface section 72, the second side surface section 72 and the third side surface section 73, the third side surface section 73 and the fourth side surface section 74, and the fourth side surface section 74 and the fifth side surface section 75 are connected to each other via first to fourth valley fold lines 81, 82, 83, and 84, respectively.

Two rectangular insertion openings 91 are formed in the fourth side surface section 74. The two insertion openings 91 are formed at the same position along the transverse direction Y as the insertion pieces 63 formed along the long side of the bottom plate section 51 to which the side wall section 53 is connected. A part of the insertion opening 91 extends beyond the third valley fold line 83 to reach the third side surface section 73.

Further, a U-shaped cut line 93 is formed at the center of the fourth side surface section 74 in the longitudinal direction X from the third valley fold line 83. When folded by the third valley fold line 83, a portion surrounded by the cut line 93 is cut from the fourth side surface section 74. The portion surrounded by the cut line 93 serves as the pressing piece 37 of the cushioning material 13.

Next, a method of forming the cushioning material 13 from the blank sheet 50 will be described. First, the second to fifth side surface sections 72, 73, 74, and 75 of each side wall section 53 are valley folded along the first to fourth valley fold lines 81, 82, 83, and 84, and the outer surface of the fifth side surface section 75 is superposed on the inner surface of the first side surface section 71. Thus, the stacked first and fifth side surface sections 71 and 75, the second side surface section 72, the third side surface section 73, and the fourth side surface section 74 form a square cylinder. Thereafter, the insertion pieces 63 formed in the bottom plate section 51 are inserted into the insertion openings 91 of the fourth side surface section 74. Thus, the first to fifth side surface sections 71, 72, 73, 74 and 75 are fixed to the square cylinder. The square cylinder serves as each of the side walls 33 of the cushioning material 13. A space surrounded by both side wall sections 53 assembled into the square cylinders and the bottom plate section 51 serves as the housing space 35 for the cushioning material 13.

Further, the pressing pieces 37 of the fourth side surface section 74 rise from the fourth side surface sections 74 and protrude into the housing space 35 at the same height as the third side surface section 73 to form the pressing piece 37.

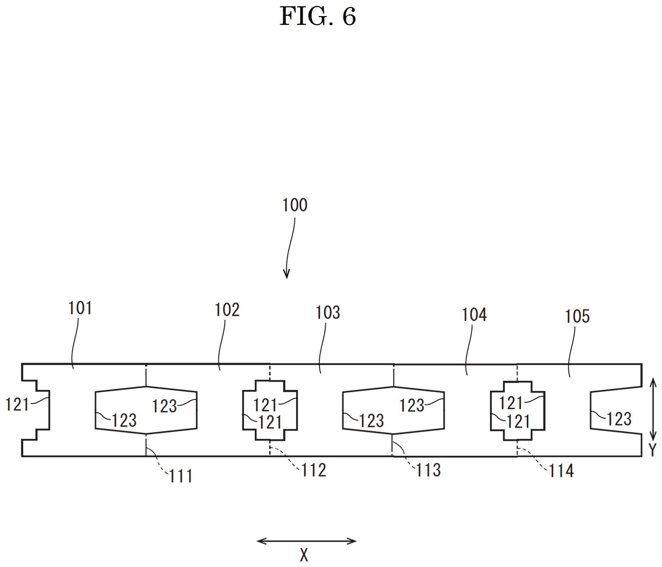

Next, the blank sheet 100 of the spacer 15 will be described with reference to FIG. 6. FIG. 6 is a developed view showing the spacer 15. FIG. 6 shows the inner surface of the blank sheet 100 as the upper surface of the spacer 15. The blank sheet 100 is made of, for example, corrugated cardboard.

The blank sheet 100 has first to fifth base sections 101, 102, 103, 104 and 105 connected on one row. The first to fifth base sections 101, 102, 103, 104, and 105 are connected via a first mountain fold line 111, a first valley fold line 112, a second mountain fold line 113, and a second valley fold line 114. Each base section has a substantially H-shape similar to the planar shape of the spacer 15, and a first notch 121 is formed on one side edge and a second notch 123 is formed on the other side edge. The second notch 123 of the first base section 101 and the second notch 123 of the second base section 102, the first notch 121 of the second base section 102 and the first notch 121 of the third base section 103, the second notch 123 of the third base section 103 and the second notch 123 of the fourth base section 104, the first notch 121 of the fourth base section 104 and the first notch 121 of the fifth base section 105 communicate with each other.

Next, a method of forming the spacer 15 from the blank sheet 100 will be described. First, the first to fifth base sections 101, 102, 103, 104, and 105 are folded along the first mountain fold line 111, the first valley fold line 112, the second mountain fold line 113, and the second valley fold line 114. That is, the first to fifth base sections 101, 102, 103, 104 and 105 are bent into bellows. Thus, the first to fourth base sections 101, 102, 103, 104 and 105 overlap in the vertical direction, and the first notch 121 and the second notch 123 of each base section also overlap in the vertical direction. Thereafter, the stacked first to fifth base sections 101, 102, 103, 104 and 105 are fixed by tape or adhesive.

As is clear from the above description, the packaging material 1 of the present embodiment can securely and compactly package an object to be packed (the fixing unit 3) having the main body 5 and the power cords 7 directly connected to one side surface of the main body 5. That is, the main body 5 is placed on the cushioning material 13, so that the shock at the time of dropping can be cushioned. The power cords 7 can be compactly housed in the housing space 35 without being forced to bend. Further, since the main body 5 is placed on the cushioning material 13 and no load is applied to the power cords 7 from the main body 5, the power cord 7 can be protected when dropped.

The spacer 15 is provided between one short side surface of the main body 5 (the surface to which the power cords 7 are connected) and the inner surface of the side plate 25 of the box body 11 of the packaging material 1. Therefore, when the packaging material 1 drops with the short side surface facing downward, a load is not applied to the power cords 7 from the main body 5, so that the power cords 7 can be surely protected.

Further, the cushioning material 13 has the pressing pieces 37 for preventing the power cords 7 housed in the housing space 35 from being detached. As a result, since the power cords 7 can be maintained in the housing space 35, packaging work of the main body 5 is facilitated. Therefore, the work of packaging the fixing unit 3 in the packaging material 1 can be improved efficiently.

The shapes and dimensions of the side walls 33 of the cushioning material 13 can be changed in accordance with the shape and weight of the object to be packed. For example, when the weight of the object to be packed is heavy, the side wall section 53 of the blank sheet 50 may be doubled to improve the strength. The height of the spacer 15 can be changed as needed. For example, the height of the spacer 15 can be changed according to the number of base sections of the blank sheet 100.

In the above embodiment, the cushioning material 13 and the spacer 15 are formed by folding the blank sheets 50 and 100, respectively. However, both side walls 33 of the cushioning material 13 and the spacer 15 may be made of foamable resin. However, as in the present embodiment, by forming the side walls 33 and the spacer 15 using the blank sheets made of corrugated cardboard, there is an advantage that the disassembling work of the packaging material 1 becomes easy and can be reused. In particular, the cushioning material 13 can be assembled without using adhesive, tape, or the like.

## Claims

1. A packaging material (1) for packaging an object having a main body and a cord integrally connected to one side surface of the main body, the packaging material (1) comprising:
a box body (11) having a cylindrical side plate (23, 25) and a bottom plate (21), and
a cushioning material (13) arranged in the box body (11) and on which the main body is placed, **characterized in that**
the cushioning material (13) has a housing space (35) in which the cord is housed.

2. The packaging material (1) according to claim 1, further comprising:
a spacer (15) arranged between the side surface of the main body placed on the cushioning material (13) and an inner surface of the side plate (25) facing the side surface of the main body.

3. The packaging material (1) according to claim 1, wherein
the cushioning material (13) has a pressing piece (37) which prevents the cord from being removed from the housing space (35).

4. The packaging material (1) according to claim 1, wherein
the cushioning material (13) has a rectangular bottom plate (31) and a pair of side walls (33) stood along long sides of the bottom plate (31), and
the housing space (35) is formed between the side walls (33).

5. The packaging material (1) according to claim 2, wherein
the spacer (15) has a notch (43) in which a bent portion of the power cord is housed.

6. The packaging material (1) according to claim 2, wherein
the cushioning material (13) and the spacer (15) are formed by folding blank sheets (50, 100).
